# FASCICULE DE BREVET EUROPEEN

(11) **EP 2 695 557 B1**
(45) Date de publication et mention de la délivrance du brevet: **04.03.2015**
(21) Numéro de dépôt: 13179219.4
(22) Date de dépôt: 05.08.2013
(51) Int. Cl.: A47J 31/44

(54) **Interface utilisateur pour machine de préparation de boissons et machine de préparation de boissons munie de cette interface**
Benutzerschnittstelle für Maschine zur Zubereitung von Getränken, und mit einer solchen Schnittstelle ausgestattete Getränkezubereitungsmaschine
User interface of a machine for preparing beverages, and machine for preparing beverages provided with said interface

(30) Priorité: 09.08.2012 FR 1257745
(43) Date de publication de la demande: 12.02.2014
(73) Titulaire: COMPAGNIE MEDITERRANEENNE DES CAFES, 06510 Carros (FR)
(72) Inventeur: Blanc, Jean-Pierre, 06000 Nice (FR); Goering, Alain, 06000 Nice (FR)
(74) Mandataire: Hautier, Nicolas

(56) Documents cités:
- DE-U1-202011 051 686
- US-A1- 2002 009 017
- US-A1- 2002 175 158

## Description

La présente invention porte sur une interface utilisateur pour un appareil électroménager, notamment une machine de préparation de boissons, avantageusement par infusion, et un appareil électroménager muni de cette interface.

Un appareil électroménager comporte classiquement au moins une interface homme machine, aussi connue sous l'appellation IHM et dénommée ci-après interface utilisateur pour la commande de l'appareil par l'utilisateur. Cette interface présente des moyens de commande, avantageusement sous la forme d'un ou de boutons de commande. Le document DE 20 2011 051686 U1 divulgue une telle interface.

En plus de la commande de l'appareil, un autre objectif d'une telle interface peut être d'informer l'utilisateur sur la phase de fonctionnement de l'appareil électroménager par éclairage de zones spécifiques dudit appareil, avantageusement avec des composants à basse consommation électrique telles que des diodes électroluminescentes (DEL ou LED).

Ainsi, pour la majorité des appareils électriques et électroniques, notamment des appareils électroménagers, l'interface utilisateur fournit une indication de l'état de fonctionnement qui est donnée sous forme d'au moins un signal visuel par un éclairage d'une zone précise correspondant à un état prédéfini et connu de l'utilisateur.

La communication s'établit entre l'appareil et l'utilisateur par apprentissage par l'utilisateur des différentes fonctionnalités de l'appareil à utiliser et des différents signaux que cet appareil peut émettre pour identifier son état de fonctionnement.

L'éclairage de certains voyants en réaction à la manipulation de certains boutons est devenu naturel pour n'importe quel utilisateur d'appareil électroménager. Les boutons étaient à l'origine de simples interrupteurs auxquels étaient associés des voyants d'indication d'état séparé. Les progrès techniques ont permis de réaliser des boutons de commande en matière plastique transparente intégrant un voyant d'état.

Les premiers voyants étaient constitués de lampes à incandescence ou de petits bulbes néon alimentés sous tension continue ou alternative. La coloration de base du plastique transparent de l'interrupteur permettait de colorer la lumière du voyant d'état. Les progrès de l'intégration électronique permirent ensuite de remplacer les ampoules à incandescence par des LED ayant l'avantage d'être alimentées en très basse tension continue. Ces composants restaient intégrés aux composants visibles en surface extérieure d'un appareil pour faire partie de l'interface utilisateur.

L'évolution en parallèle de la technologie de fabrication des cartes électroniques vers le montage de surface CMS ou SMD et bien qu'elle autorise la réduction de la taille intrinsèque de chaque composant, impose maintenant la présence d'un circuit ou d'une carte imprimée comme support de ces composants miniaturisés et rend plus difficile l'intégration de voyants dans un sous-ensemble du fait du volume conséquent qu'occupe une LED CMS et son circuit imprimé support.

Pour solutionner ce problème d'encombrement, il a été fait recours à des guides lumière qui sont des pièces plastiques transparentes réalisées à base de Polycarbonate (PC), de Polyamide (Pa12), de Polystyrène (PS et SAN) ou de Polyméthacrylate de méthyle (PMMA). Ces pièces transparentes, couramment longilignes, ont la propriété de réfléchir la lumière sur leurs faces internes et de la conduire de face en face d'une extrémité à l'autre desdites pièces selon le même principe que la fibre optique mais sans présenter la souplesse d'une telle fibre à base de verre. Le principe de base de la conduction de lumière dans un tel guide lumière réside dans une différence d'indice de réfraction entre l'air ambiant et la matière plastique qui conduit à créer au sein de la pièce transparente des effets miroirs.

Ainsi, pour un quelconque appareil, il devient possible de conduire la lumière émise par une LED depuis un circuit ou une carte imprimée présente au centre de son volume jusqu'à un point d'affichage se trouvant sur une des faces extérieures et ayant vocation à servir d'interface utilisateur. Les caractéristiques optiques de certaines matières plastiques permettent de diffuser la lumière de façon homogène sur une grande surface et donc d'amplifier la visibilité en terme de surface visible d'un signal lumineux généré par un composant de très petite taille et donc de très faible surface visible.

La conduction de la lumière est basée sur la réflexion de face en face interne d'une pièce plastique transparente en tenant compte des règles de conception permettant de réaliser cette pièce de façon industrielle par injection. Ceci présente le grand désavantage de conduire à des pièces de géométrie complexe et dont l'encombrement reste important au sein de l'appareil.

En plus du volume de la pièce plastique transparente la rigidité d'une pièce plastique oblige à séparer l'organe d'affichage d'une indication d'état de l'appareil, sous forme lumineuse, de l'organe de communication tactile comme un bouton poussoir. En effet, l'activation du bouton poussoir conduit à une déformation incompatible avec la rigidité de la pièce plastique. Il s'ensuit que la diffusion de la lumière n'est pas homogène et constante lors de la sollicitation du bouton poussoir.

Une possibilité de réduction du volume global de l'interface utilisateur consiste à utiliser un organe de communication non tactile, au sens où il n'y pas d'action mécanique ressentie par l'utilisateur, tel que des touches inductives ou capacitives qui sont des détecteurs de présence. Ces touches sont aussi dénommées touches à effleurement. L'avantage d'une telle technologie est de pouvoir installer une zone de détection derrière une indication lumineuse et d'obtenir une interface utilisateur de très faible épaisseur.

Leur grand désavantage est que l'utilisateur d'une telle touche n'a pas de sensation de la prise en compte de son action sur l'appareil. Seul un changement d'apparence de l'interface utilisateur permet d'indiquer la prise en compte de son action sur l'appareil.

Un autre désavantage est que la durée de l'effleurement d'une touche sensitive peut conduire à des erreurs. En effet, si la durée de l'effleurement est trop longue, il peut y avoir génération d'une erreur due à une prise en compte par l'appareil de plusieurs actions successives sur la même touche comparable à une action redondante. A l'inverse, si la durée de l'effleurement est trop courte par rapport à la base de temps de la logique programmée embarquée dans l'appareil, il n'y a pas de prise en compte de l'ordre donné par l'utilisateur à son grand étonnement.

Une seconde possibilité de réduction du volume global de l'interface utilisateur consiste à regrouper les composants lumineux et tactiles sur un même circuit ou carte imprimée de la plus faible surface possible et de positionner une pièce plastique transparente mobile au-dessus de cette surface, en contact avec les composants tactiles. L'appui sur la pièce plastique transparente mobile avec les composants lumineux ne permet cependant pas une transmission lumineuse efficace pendant cette manipulation par l'utilisateur.

La présente invention a pour objectif de proposer une interface utilisateur compacte permettant l'éclairage de la fonction d'utilisation sélectionnée pour sa reconnaissance par l'utilisateur, ceci en tenant compte que l'interface utilisateur comprend un bouton de commande destiné à être enfoncé par l'utilisateur et donc devant bouger pendant l'action de l'utilisateur sur l'interface.

A cet effet, la présente invention concerne une interface utilisateur pour appareil électroménager, l'interface utilisateur comportant un support configuré pour être rendu solidaire de l'appareil, au moins un bouton de commande monté sur le support et comprenant au moins une zone d'appui conformée pour être enfoncée par un utilisateur et au moins une source lumineuse, caractérisée en ce qu'elle comprend au moins une pièce flexible, dont une première portion supporte la zone d'appui dudit bouton et une seconde portion est solidarisée au support, ladite au moins une pièce formant un guide lumière comprenant une zone d'entrée de la lumière en son intérieur. Ladite au moins une source lumineuse est disposée au contact ou au regard de ladite zone d'entrée du guide lumière, ladite zone d'entrée étant réalisée à proximité de ladite seconde portion de sorte à rester dans la même position par rapport à ladite au moins une source lumineuse que la zone d'appui soit sollicitée ou non.

L'effet technique est de pouvoir conserver le retour d'information tactile par la pression du bouton de commande tout en permettant l'affichage d'une indication visuelle relative au fonctionnement de l'appareil. Ceci se fait en réduisant le volume global de l'interface utilisateur en intégrant le guide lumière en tant que pièce flexible dans l'organe de communication tactile et en le rendant flexible de manière à suivre et supporter les déformations de cet organe tactile, sans modification de la distance optique initiale avec la source lumineuse.

Une telle pièce flexible a deux exigences contradictoires à respecter. La première exigence est que la pièce doit accompagner le bouton de commande associé dans son mouvement de descente lors de la pression du doigt de l'utilisateur exercée sur le bouton. La seconde exigence est que la pièce doit rester en contact ou en regard de la source lumineuse même et surtout lors de la pression du bouton. La solution à ces deux exigences est de maintenir la pièce à proximité de la source lumineuse dans cette zone, d'où un déplacement nul ou très faible par rapport à la source lumineuse tandis que le reste de la pièce peut suivre le mouvement du bouton du fait de la flexibilité. La distance entre la zone d'entrée de la lumière et la source de lumière demeure donc constante que le bouton soit enfoncé ou non. Par conséquent, la diffusion de la lumière demeure donc sensiblement constante.

De manière facultative, l'invention comprend en outre au moins l'une quelconque des caractéristiques suivantes :
- l'interface comprend un circuit ou une carte imprimée contre laquelle est appliqué le support, chaque bouton de commande présentant au moins un contacteur associé respectivement à un micro-interrupteur porté par le circuit imprimé, le contacteur étant mis en contact avec le micro-interrupteur quand la zone d'appui est enfoncée par l'utilisateur, ledit circuit imprimé portant ladite au moins une source lumineuse.
- le support est délimité par un rebord, la hauteur du rebord correspondant sensiblement à la course d'enfoncement dudit au moins un bouton de commande lorsqu'un utilisateur exerce un appui sur ledit bouton, les deux côtés opposés du rebord définissant respectivement une face interne et une face externe, la face interne du support étant appliquée contre le circuit imprimé sensiblement plan. De manière optionnelle, des moyens de solidarisation amovible étant prévus entre le circuit imprimé et la face interne dudit support.
- ladite au moins une source lumineuse est une diode électroluminescente (LED). De préférence, la LED est associée à un circuit ou une carte imprimée. De préférence, la LED forme un composant de type CMS c'est-à-dire monté à la surface de la carte ou du circuit.
- la course d'enfoncement est comprise entre 1.5 et 6 mm. Elle est de préférence sensiblement égale à 3 mm.
- la zone d'appui et le bouton sont maintenus au support uniquement par la au moins une pièce.
- le guide lumière guide de la lumière issue de la source lumineuse jusqu'à la zone d'appui et la zone d'appui diffuse une partie au moins de cette lumière en direction de l'utilisateur pour le rendre visible par ce dernier.
- ladite au moins une pièce flexible formant guide lumière et le support sont d'un seul tenant. Ils forment une pièce monolithique.
- ladite au moins une pièce flexible et le bouton de commande pression compose une pièce unique. Ils forment une pièce monolithique.
- ladite au moins une pièce flexible formant guide lumière, le support et, le cas échéant, le bouton de commande sont réalisés par surmoulage.
- la solidarisation entre ladite au moins une pièce flexible formant guide lumière et le support à proximité de ladite au moins une zone formant une entrée de la lumière pour le guide est faite par l'intermédiaire d'un élément de liaison.
- ladite au moins une pièce flexible formant guide lumière comporte un canal interne muni de facettes réfléchissantes sur sa paroi interne.
- ladite au moins une pièce flexible est sensiblement longiforme, la première portion étant disposée à une extrémité de ladite pièce tandis que la seconde portion est disposée à la seconde extrémité de ladite pièce. Ainsi, les première et seconde portions sont opposées sur ladite au moins une pièce flexible et il est obtenu plus de rigidité à l'extrémité de la pièce portant la source lumineuse et plus de flexibilité à l'autre extrémité portant le bouton de commande.
- ladite au moins une pièce flexible formant guide lumière présente une forme en U, avec une première branche du U dont l'extrémité libre forme la zone d'entrée de la lumière en son intérieur et une seconde branche dont l'extrémité libre forme la première portion supportant la zone d'appui dudit bouton.
- la seconde branche est plus courte que la première branche.
- il est prévu deux pièces flexibles formant chacune un guide lumière pour au moins un des boutons de commande. De manière optionnelle, les deux pièces flexibles sont disposées de manière symétrique par rapport au bouton.
- les U des deux pièces flexibles formant guide lumière sont inversés et décalés, l'ensemble des deux pièces flexibles présentant une forme en S.
- ladite au moins une pièce flexible formant guide lumière est agencée de sorte à diffuser la lumière qui la pénètre sur toute sa surface visible depuis l'extérieur de l'appareil.
- ladite au moins une pièce flexible formant guide lumière est agencée de sorte à diffuser de la lumière au niveau de la zone d'appui du bouton de commande.
- le bouton de commande comporte sur sa zone d'appui au moins un cône diffusif de lumière.
- une pièce de revêtement recouvre la face externe du support et les boutons de commande.
- le ou les boutons de commande font partie d'un clavier à membrane.

L'invention concerne aussi un appareil électroménager, caractérisé en ce qu'il comprend une telle interface utilisateur.

Avantageusement, l'appareil électroménager est une machine de préparation de boisson à partir d'un produit à infuser introduit dans la machine.

Avantageusement, l'appareil électroménager sous forme d'une machine de préparation de boisson comprend un module d'extraction formant la partie supérieure de sa face avant, l'interface utilisateur étant disposée sur ladite face.

L'invention porte également sur une machine de préparation de boisson comprenant une interface utilisateur selon l'invention. De préférence, la machine comprend un module d'extraction d'un produit à infuser. De préférence, le module d'extraction forme une face avant de la machine, l'interface utilisateur étant disposée sur ladite face.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1 est un schéma illustrant une vue en perspective d'un exemple de machine de préparation de boisson selon la présente invention, cette machine présentant une interface utilisateur pour la commande en fonctionnement de la machine, ladite machine illustrant un appareil électro-ménager selon la présente invention,
La figure 2 est un schéma illustrant une vue de face en perspective d'un exemple d'interface utilisateur selon la présente invention détachée de la machine de préparation de boisson,
La figure 3 est un schéma illustrant une vue en perspective et en éclaté de l'interface utilisateur de la figure 2,
La figure 4 est un schéma illustrant une vue en perspective de l'intérieur de l'interface utilisateur selon la présente invention montrée à la figure 3,
La figure 5 est un schéma illustrant une vue en perspective, agrandie par rapport à la figure 4 d'une portion de l'intérieur de l'interface utilisateur selon la présente invention, le parcours des faisceaux lumineux dans ladite partie étant illustré à cette figure,
La figure 6 est un schéma illustrant une vue en perspective, agrandie par rapport à la figure 3, d'une partie de l'interface utilisateur selon la présente invention, l'interface ayant été coupée longitudinalement au niveau d'un bouton de commande afin de montrer le fonctionnement dudit bouton, le bouton de commande n'étant pas dans sa position enfoncée,
La figure 7 est un schéma similaire à la figure 6, le bouton de commande ayant été enfoncé à cette figure,
La figure 8 est un schéma similaire à la figure 3, l'interface utilisateur étant munie d'un clavier à membrane souple et étant vue en éclaté.

Dans ce qui va suivre, l'interface utilisateur sert à la commande d'une machine de préparation de boisson. Si cela est son application préférentielle, il est à garder à l'esprit qu'une telle interface utilisateur est cependant utilisable dans n'importe quel appareil électroménager.

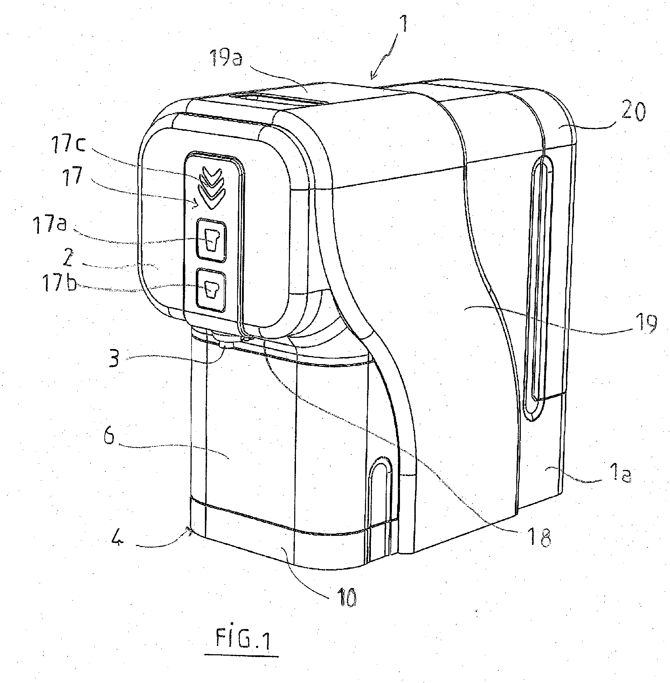

En se référant plus particulièrement à la figure 1, cette figure montre une machine 1 de préparation de boisson, notamment une machine de préparation de boisson infusée, par exemple mais pas seulement une machine à café ESPRESSO.

La machine 1 comprend en son intérieur une chaudière pour porter le liquide servant de base à la boisson, avantageusement de l'eau, à une température d'environ 90°C ainsi qu'une chambre d'infusion pour l'infusion d'un produit à infuser typiquement compris dans un conditionnement.

En effet, la machine 1 est de préférence configurée pour recevoir des conditionnements enfermant du produit à infuser, pour effectuer une extraction du produit contenu dans le conditionnement dans le module 2 d'extraction.

Dans le cadre de la présente invention, on peut utiliser des conditionnements du type présenté sur les figures et décrits dans le document WO-A-95/07041, bien que cet exemple ne soit pas limitatif. Dans ce document, le conditionnement forme une dose et le produit à infuser, par exemple la mouture de café, est enfermé dans un volume intérieur de la dose constituée par l'assemblage de couches jointes par leur périphérie au niveau d'un pourtour. Avantageusement, la présente invention est utilisable avec des types variés de conditionnements.

De manière plus générale, l'invention s'applique quel que soit le type de conditionnements. Elle s'applique aux conditionnements présentant une enveloppe extérieure souple ou rigide de type capsule. Elle s'applique également aux conditionnements dont l'enveloppe extérieure est apte à disparaître au moins en partie lors de l'infusion, par dissolution par exemple. Elle s'applique encore aux conditionnements formés d'un produit à infuser agrégé par un liant et/ou par l'application d'une pression. Un tel conditionnement formé d'un agrégat de produit à infuser tel que le café peut être constitué en dehors de la machine ou être constitué par un module dédié de la machine.

La machine 1 à infuser présente un corps 1a. Le corps 1a comporte un module 2 d'extraction d'une boisson à infuser. Le corps 1a comprenant le module 2 forme une enceinte fermée empêchant l'accès de l'extérieur aux organes intérieurs contenus dans la machine 1, par exemple la chaudière la chambre d'infusion et la pompe.

Avantageusement, l'enceinte est réalisée dans l'une des matières suivantes qui offre une bonne protection mécanique ainsi qu'une bonne isolation thermique et électrique : ABS, PMMA, alliage ABS-PC ou ABS-PMMA

Le module d'extraction 2, faisant partie du corps 1a est muni sur sa face inférieure 18 d'un bec verseur 3 de sortie de boisson, destiné à verser ladite boisson dans un récipient disposé en dessous du bec verseur 3, ce récipient pouvant reposer sur une bassinelle 4.

La machine 1 à infuser peut aussi présenter, sur sa face avant formée par le module d'extraction 2, un panneau de commande ou interface utilisateur 17. Cette interface utilisateur 17 est de préférence munie de pictogrammes de commande 17a, 17b et 17c, avantageusement sous forme de boutons, permettant par exemple pour deux boutons 17a, 17b d'entre eux de sélectionner la quantité de boisson à verser selon le type de récipient que l'on veut utiliser, par exemple soit un grand récipient ou soit un petit récipient et, pour le dernier bouton 17c, d'activer le versement de la quantité de boisson sélectionnée. Ces deux boutons permettent donc à l'utilisateur de sélectionner la boisson qu'il souhaite, avec comme exemple pour le café : soit un café «court » ou « serré » en sélectionnant la tasse de petit format, soit un café «long» ou « américain » en sélectionnant la tasse de grand format. D'autres possibilités de commande, par exemple le type de produit à infuser ou l'ajout de produits auxiliaires dans le produit à infuser sont naturellement aussi possibles et les boutons de commande 17a, 17b, 17c ne sont pas limités au nombre de trois. Le bouton 17c peut par exemple servir à l'activation de la machine, par exemple depuis un mode de veille. Selon une alternative, la référence 17c peut également représenter une zone diffusant de la lumière mais non adaptée à former un bouton. Cette zone coopérerait alors avec au moins une source de lumière mais ne coopérerait pas avec un interrupteur de prise en compte d'une pression exercée par l'utilisateur.

Le panneau de commande ou interface utilisateur 17 peut s'étendre sur la partie médiane de la face avant du module d'extraction 2 de haut en bas en formant une bande de largeur réduite par rapport à sa longueur. Avantageusement, la partie inférieure du panneau de commande ou interface utilisateur 17 peut recouvrir la portion médiane de la face inférieure 18 du module 2 d'extraction qui porte le bec verseur 3 au-dessus du récipient à remplir, ladite face inférieure 18 présentant un orifice de passage pour le passage du liquide infusé vers le bec verseur 3.

La machine 1 comprend aussi un bac 6 de recueillement des conditionnements ayant été infusés. Une bassinelle 4 est prévue en dessous du bac 6 de recueillement. Avantageusement, la bassinelle 4 est amovible. De préférence, le bac 6 se loge dans un espace défini par le corps 1a de la machine 1 à l'avant de celle-ci.

Un réservoir d'eau 20 est prévu à l'arrière de la machine 1 et est destiné à être rempli par l'utilisateur. L'eau qu'il contient est destinée à alimenter la chaudière avant l'infusion. Avantageusement, la machine 1 à infuser est configurée pour que la bassinelle 4 présente une position déployée dans laquelle la bassinelle 4 est agencée pour pouvoir servir de support à un récipient destiné à recevoir la boisson et une position rétractée dans laquelle la bassinelle 4 est logée au moins en partie à l'intérieur du corps 1a de la machine 1. Cette dernière position peut être vue à la figure 1.

La machine 1 est avantageusement configurée de sorte que le passage de la position déployée à la position rétractée et inversement s'effectue par coulissement. Ainsi, pour un récipient de petite taille, la bassinelle 4 est en position déployée. Pour un récipient de grande taille, la bassinelle 4 est en position rétractée et dégage de la place en dessous du module d'extraction 2 pour la mise en place d'un récipient de grande taille. Ce récipient de grande taille n'est alors pas supporté par la bassinelle 4.

Pour la machine 1 à infuser selon l'invention, il peut aussi être prévu des éléments externes 19, 19a solidarisés de décoration ou de protection portés par la paroi extérieure de la machine 1 formée par le corps 1a, par exemple au niveau du module 2 d'extraction. Le corps 1a est configuré pour délimiter une enceinte close de protection des organes intérieurs de la machine 1, afin d'empêcher tout accès aux organes de la machines. Ces éléments peuvent comprendre un couvercle 19a et des panneaux latéraux 19.

Dans ce qui va suivre, notamment pour le support de l'interface utilisateur 17, ce qui est dénommé par interne correspond à une position dirigée vers l'intérieur de la machine tandis qu'externe signifie le contraire.

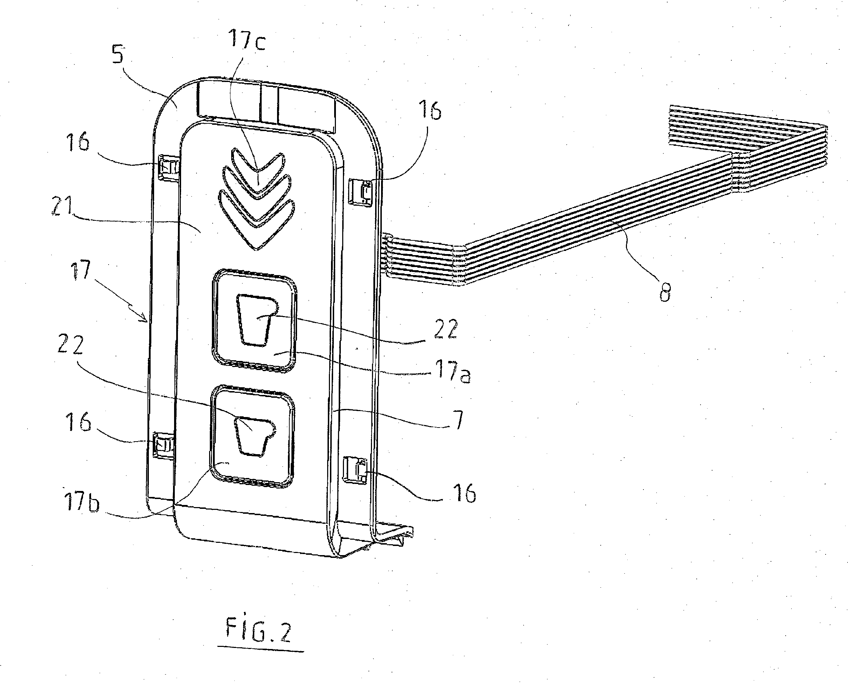

La figure 2 montre une interface utilisateur 17 munie de trois boutons de commande 17a, 17b, 17c. Une telle interface utilisateur 17 comprend une enveloppe 5 réalisant l'encadrement d'un support 7 sur lequel sont posés les boutons de commande 17a, 17b, 17c. L'enveloppe 5 est avantageusement destinée à être positionnée à l'intérieur de la machine à infuser en butée contre la face intérieure du module d'extraction sur lequel se trouve l'interface utilisateur 17, le support 7 et ses boutons de commande dépassant alors légèrement de la face avant du module d'extraction.

L'enveloppe 5 peut comprendre des moyens d'encliquetage 16 permettant avantageusement sa solidarisation amovible avec la face intérieure du module d'extraction. L'enveloppe 5 comprend aussi une face inférieure 5a recourbée sensiblement à angle droit du reste de l'enveloppe 5, cette face inférieure 5a pénétrant dans le module d'extraction en étant supportée contre la face inférieure dudit module, sur laquelle sur trouve le bec verseur de la machine.

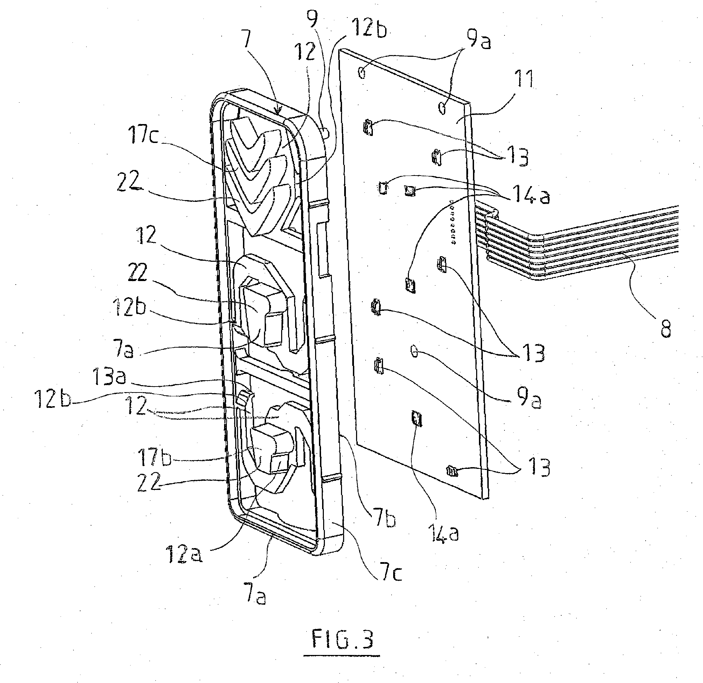

En se référant notamment aux figures 2 et 3, l'interface utilisateur 17 pour appareil électroménager comporte un support 7 configuré pour être rendu solidaire de l'appareil 1, au moins un bouton de commande 17a à 17c monté sur le support 7 et comprenant au moins une zone d'appui 22 conformée pour être enfoncée par un utilisateur. La figure 2 illustre deux voire trois boutons ce qui n'est pas limitatif de l'invention.

L'interface utilisateur 17 comprend aussi au moins une pièce flexible, non visible à la figure 2 mais visible à la figure 3 sous la référence 12, avec une première portion 12a supportant la zone d'appui 22 d'un bouton associé 17a à 17c et une seconde portion 12b solidarisée au support 7. La dite au moins une pièce flexible 12 forme un guide lumière comprenant au moins un récepteur 13a ou zone d'entrée de la lumière en son intérieur. Le guide lumière peut également être qualifié de guide de lumière ou de guide d'ondes.

L'interface utilisateur 17 comprend au moins une source lumineuse 13, non visible à la figure 2 mais visible à la figure 3, cette source lumineuse 13 étant disposée au contact ou au regard de ladite zone d'entrée 13a de ladite au moins une pièce flexible 12 formant guide lumière. La zone d'entrée 13a est réalisée à proximité de ladite seconde portion 12b de sorte à rester dans la même position par rapport à ladite au moins une source lumineuse 13 que la zone d'appui 22 soit sollicitée ou non. Ainsi, la zone d'entrée 13a demeure positionnée au regard et à égale distance de la source lumineuse 13 permettant ainsi une diffusion constante de la lumière par le bouton que la zone d'appui 22 soit sollicitée ou non.

Ainsi, ladite au moins une pièce flexible 12 suit le mouvement de descente du bouton de commande 17a à 17c quand pressé par l'utilisateur tout en pouvant remplir son rôle de guide lumière, son récepteur 13a formant la zone d'entrée restant en contact ou au regard de la source lumineuse 13.

Les boutons de commande 17a à 17c peuvent être des boutons pressions mais dans une autre forme de réalisation de la présente invention peuvent faire partie d'un clavier à membrane, aussi appelé clavier souple. Dans ce cas, il convient d'intercaler entre le clavier et le support de la source lumineuse 13, par exemple un circuit ou une carte imprimée, une pièce plate rigide sur laquelle sera appliquée le clavier à membrane. Dans le cas de l'utilisation d'un clavier à membrane, l'interface utilisateur 17 comporte, en plus du support 7 et du support de la source lumineuse 13, une couche supplémentaire permettant de rigidifier le clavier souple.

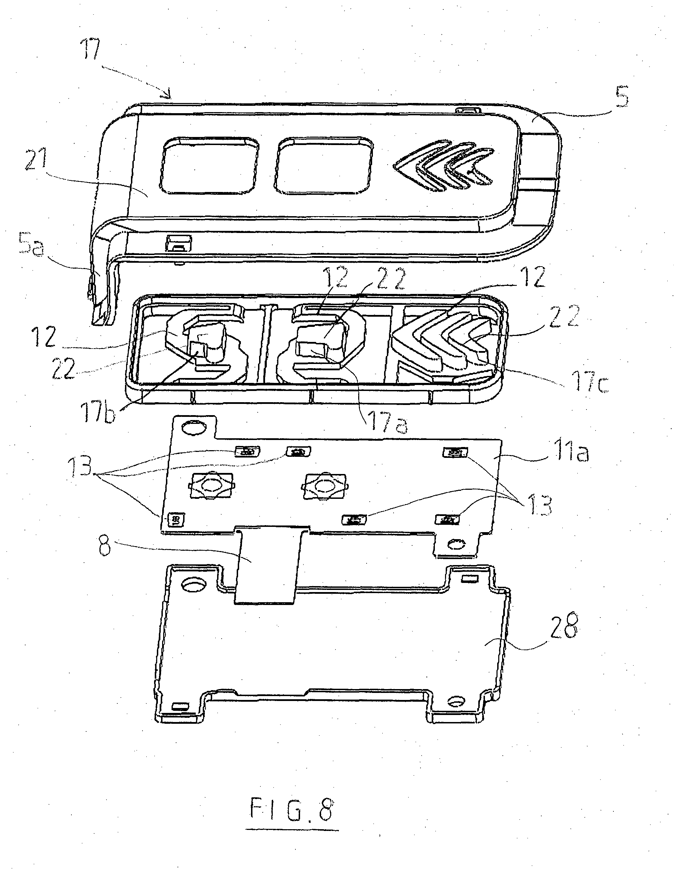

A la figure 8, il est montré pour une interface utilisateur 17 une pièce souple 11 a formant clavier qui remplace le circuit imprimé 11 visible à la figure 3. La pièce souple 11a est supportée par une pièce plate rigide 28. Sinon les autres caractéristiques de l'interface utilisateur 17 restent inchangées.

L'interface utilisateur 17 comprend aussi une alimentation électrique sous la forme d'un flexible électrique 8, avantageusement un ruban flexible, connecté d'une part à l'intérieur de la machine à une source électrique et de l'autre à un circuit ou une carte imprimée recouvert par le support 7 à la figure 2 et donc non visible à cette figure.

En se référant aux figures 3 à 7, il peut être vu que le support 7 présente un rebord 7c le délimitant et définissant, d'une part, une face interne 7b creuse en direction d'un circuit ou carte imprimée 11 comme support de la source lumineuse 13 et, d'autre part, une face 7a externe creuse de laquelle font saillie les boutons de commande 17a à 17d.

La face externe 7a du support 7 ainsi que les boutons de commande 17a, 17b, 17c, 17d peuvent être recouvertes d'une pièce de revêtement 21. Cette pièce de revêtement 21 sert avantageusement à protéger les boutons de commande 17a à 17d de diverses salissures ou projections ainsi que de masquer, pour l'extérieur, l'intérieur du support 7 et les divers éléments contenus dans le support 7, comme les pièces flexibles 12, comme il sera vu ultérieurement.

En se référant à la figure 3, le circuit imprimé est par contre visible à cette figure 3 sous la référence 11. Le circuit imprimé 11 est sous forme sensiblement rectangulaire en portant la connexion électrique par le flexible électrique 8 sur une face interne et sur l'autre face, dite externe, recevant le support 7. Le circuit imprimé 11 comprend sur sa face externe recevant la face interne 7b du support 7 des logements 9a pour recevoir des plots 9 portés par ladite face interne 7b du support 7. La coopération entre ces plots 9 et ces logements 9a facilitent la mise en position et le maintien en position du support 7 par rapport à la carte.

Sur cette même face recevant le support 7, le circuit imprimé 11 comprend aussi au moins une source lumineuse 13, avantageusement plusieurs sources lumineuses 13 et préférentiellement deux sources lumineuses 13 par bouton de commande 17a, 17b, 17c. A la figure 3, il est montré par exemple deux sources lumineuses pour chacun des trois boutons 17a, 17b, 17c. Ces sources lumineuses 13 sont avantageusement sous la forme de LEDs ou DELs, c'est-à-dire des diodes électroluminescentes. Avantageusement, ces LED sont intégrées à la carte sous forme de composants montés en surface suivant la technologie habituellement qualifiée de CMS (composants montés en surface).

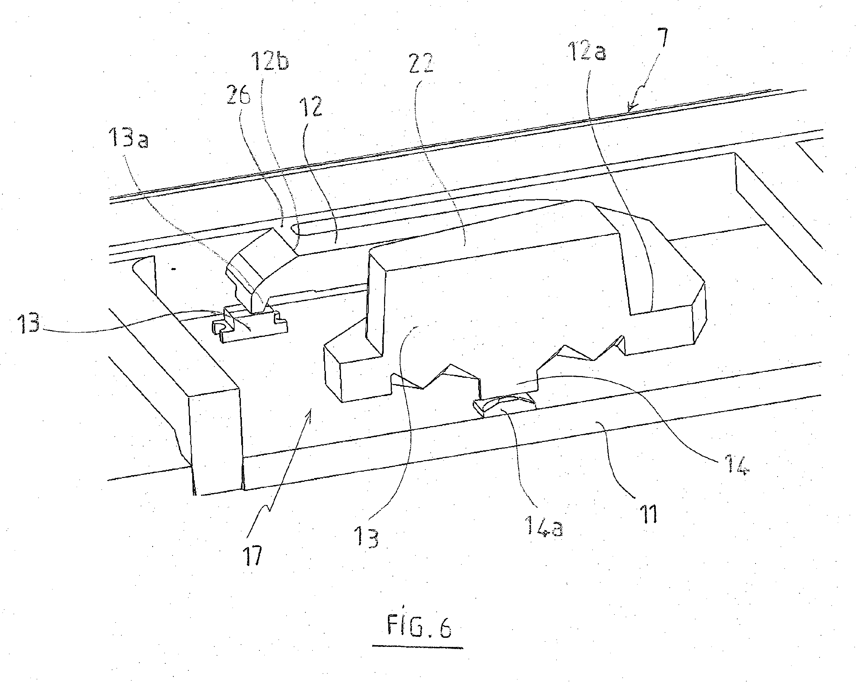

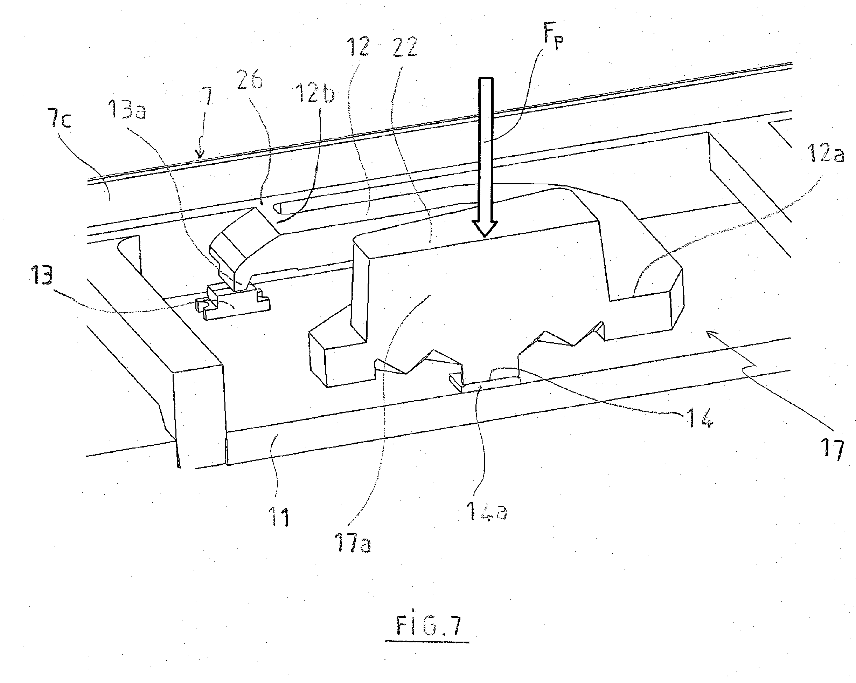

Le circuit imprimé 11 comprend aussi des micro-interrupteurs 14a agissant en association des contacteurs respectifs portés par la face interne des boutons de commande 17a à 17c, ces contacteurs n'étant pas visibles à cette figure 3 mais pouvant être vus sous la référence 14 aux figures 6 et 7 pour un bouton de commande 17d. Ces micro-interrupteurs 14a font saillie du circuit imprimé 11 vers la face creuse interne 7b du support 7 et traversent ladite face 7b, comme il sera expliqué ultérieurement en regard des figures 6 et 7. De préférence, ces micro-interrupteurs 14a forment également des composants de type CMS.

A la figure 3, les deux micro-interrupteurs 14a voisins les plus hauts sont dédiés au bouton de commande 17c, dans l'exemple non limitatif de la machine de préparation de boisson le bouton d'actionnement de versement du liquide de boisson. Le contacteur 14a de niveau intermédiaire du circuit imprimé 11 à la figure 3 est associé au bouton de commande 17a et le contacteur 14a disposé au niveau le plus bas du circuit imprimé à la figure 3 est associé au bouton de commande 17b. Ces boutons 17a et 17b sont dans l'exemple de la figure 3 des boutons de sélection de la dose de boisson à verser selon le récipient choisi. Un pictogramme symbolise avantageusement la fonction du bouton de commande 17a, 17b, 17c. Selon une variante de réalisation, les micro-interrupteurs 14a voisins les plus hauts et associé à la référence 17c seraient supprimés, cette référence 17c n'aurait alors pas de rôle de bouton de commande et n'aurait alors qu'un rôle esthétique. Dans ce cas, les boutons 17a et 17b serviraient à la fois à sélectionner la boisson et à déclencher le cycle de préparation de la boisson.

Le rebord 7c délimitant les faces externe 7a et interne 7b du support 7 est tourné vers le circuit imprimé 11 et est destiné à présenter son côté le plus proche du circuit imprimé 11 à être appliqué contre ledit circuit 11. De l'autre côté du rebord 7c du support 7 font saillie les boutons de commande 17a, 17b en dépassant de la face externe 7a creuse du support 7. L'épaisseur du support 7 correspondant à la hauteur du rebord 7c est prédéterminée en fonction de la course d'appui des boutons de commande 17a, 17b, 17c et peut, par exemple, être comprise entre 0.3 et 3mm et de préférence moins de 1 mm.

C'est la portion des boutons de commande 17a, 17b, 17c la plus éloignée de la base du support 7 qui est pressée par l'utilisateur quand celui-ci veut actionner une fonction de l'appareil électroménager, ici une machine de préparation de boissons. Cette portion forme la zone d'appui 22 pour chaque bouton de commande 17a, 17b, 17c.

Une caractéristique avantageuse de la présente invention est que le support 7 présente une pièce flexible 12 qui a comme première fonction de supporter le bouton de commande 17a, 17b, 17c de manière flexible afin qu'un utilisateur puisse mettre son doigt sur la zone d'appui du bouton 17a, 17b, 17c et le presser. Pour ce faire, ladite au moins une pièce flexible 12 suit le bouton 17a, 17b, 17c dans son mouvement de descente vers le circuit imprimé 11 tout en rappelant le bouton 17a, 17b, 17c dans sa position de départ quand aucune pression n'est appliquée sur la zone d'appui 22 du bouton 17a, 17b, 17c.

Comme seconde fonction, ladite au moins une pièce flexible 12 forme au moins un guide lumière transmettant en son intérieur un faisceau lumineux d'au moins une source lumineuse 13 vers le bouton de commande 17a, 17b, 17c associé. Pour cela, avantageusement chaque pièce flexible 12 formant guide lumière présente une de ses extrémités disposée sur ou en regard d'une source lumineuse 13, ladite extrémité présentant un récepteur 13a de lumière pour capter le faisceau lumineux issu de la source lumineuse 13.

Selon la présente invention, à proximité de son extrémité disposée sur ou en regard de la source lumineuse 13, ladite au moins une pièce flexible 12 formant guide lumière 12 est solidarisée avec le support 7. Ceci peut être fait par un ou des éléments de solidarisation amovible ou non, compte tenu que le support 7 et ladite au moins une pièce flexible 12 sont séparés ou sont d'un seul tenant du fait d'un élément de liaison venu de matière du support 7 et de ladite au moins une pièce flexible 12. Un exemple d'élément de liaison est référencé 26 aux figures 6 et 7, cet élément de liaison 26 étant d'un seul tenant avec ladite au moins une pièce flexible 12 et le rebord 7c du support 7.

Avantageusement, à chaque bouton de commande 17a, 17b, 17c, il peut être associé deux guides lumière 12 donc deux pièces flexibles. Ces deux guides lumière 12 peuvent fonctionner alternativement, en étant par exemple éclairés par une source lumineuse 13 respective présentant une couleur différente pour les deux sources lumineuses 13 associées à un même bouton de commande 17a, 17b, 17c. Les deux guides lumière associés à un même bouton de commande 17a, 17b, 17c peuvent aussi fonctionner en complément pour le renforcement de l'intensité lumineuse envoyée vers le bouton de commande 17a, 17b, 17c associé.

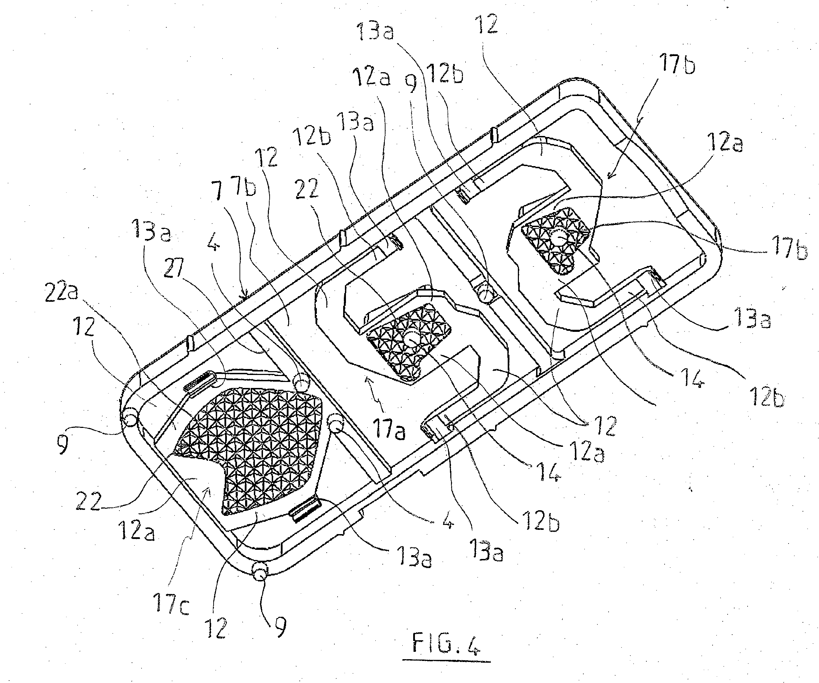

La figure 4 montre le support 7 de l'interface utilisateur vu par sa face interne 7b, donc la face du support 7 tournée vers le circuit imprimé. A cette figure, il est visible au moins un contacteur 14 par bouton de commande 17a, 17b, 17c, avec deux contacteurs 14 pour le bouton de commande 17c.

A cette figure, sont associées aux boutons de commande 17a 17b, 17c deux pièces flexibles 12 rattachées à un bord opposé du rebord 7c du support 7. Les deux pièces flexibles 12 sont avantageusement disposées de manière symétrique pour chaque bouton 17a, 17b. Les deux pièces flexibles 12 sont avantageusement d'un seul tenant entre elles et sont aussi d'un seul tenant avec le bouton de commande 17a, 17b, 17c correspondant. Chacune des deux pièces flexibles 12 associées à un bouton de commande 17a, 17b est reliée à un bord longitudinal respectif du rebord 7c du support 7. Ceci permet d'obtenir une bonne rigidité de chacune des pièces flexibles 12 dans sa portion, dite seconde portion 12b, disposée près du rebord 7c et qui porte le récepteur 13a de lumière tout en permettant une bonne flexibilité à la portion des pièces flexibles 12 supportant le bouton de commande 17a, 17b, cette dernière portion étant dite première portion 12a de la pièce flexible 12.

Pour les boutons de commande 17a et 17b, chaque pièce flexible 12 formant un guide lumière respectif présente avantageusement une forme en U, avec une première branche du U dont l'extrémité libre porte le récepteur 13a formant la zone d'entrée de la lumière en son intérieur et une seconde branche dont l'extrémité libre forme la première portion 12a supportant la zone d'appui 22 dudit bouton 17a et 17b, la seconde branche étant plus courte que la première branche.

Les deux pièces flexibles 12 associées forment chacune un guide lumière pour le bouton de commande 17a et 17b, le U formé par la première pièce 12 formant guide lumière étant inversé et décalé par rapport au U formé par la seconde pièce 12 formant guide lumière, l'ensemble des deux pièces 12 formant guide lumière présentant une configuration en forme en S avec le centre du S occupé par le bouton de commande 17a, 17b. La partie supérieure du S est ainsi réalisée par une pièce flexible 12 formant guide lumière tandis que la partie inférieure du S est réalisée par l'autre pièce flexible 12 formant guide lumière, chaque extrémité du S étant terminée par un récepteur 13a de lumière respectif pour capter le faisceau lumineux issu de la source lumineuse portée par le circuit imprimé.

Le support du bouton de commande 17c par deux pièces flexibles 12 associées est différent du support effectué pour les boutons de commande 17a, 17b. Dans ce mode, le récepteur 13a de lumière est disposé vers le milieu de chaque pièce flexible 12 formant guide lumière, chaque pièce flexible 12 présentant une extrémité reliée au côté latéral du rebord 7c du support 7 tandis que l'autre extrémité est reliée à une traverse 27 reliant un bord longitudinal du rebord 7c à l'autre bord. Ainsi, chaque pièce flexible 12 présente la forme d'un V ouvert vers la zone d'appui 22 du bouton de commande 17c, la partie ouverte du V de chaque pièce flexible 12 supportant de manière symétrique le bouton de commande 17c.

Avantageusement, la zone d'appui 22 pour le doigt de l'utilisateur de chaque bouton de commande 17a, 17b, 17c est revêtue d'une surface d'éclairage transparente formée d'une pluralité de cônes diffusifs 22a dont un seul est référencé au bouton de commande 17c à la figure 4, mais ceci s'applique avantageusement pour tous les boutons 17a à 17c.

Avantageusement, la pièce flexible 12 formant guide lumière présente une forme longiligne agencée de manière à être localement déformable tout en continuant d'assurer la réflexion du flux lumineux même dans la zone localement déformée. En effet, quand le bouton de commande 17a, 17b, 17c est appuyé par le doigt de l'utilisateur, une pression est aussi transmise à la pièce flexible 12 formant guide. De plus, ladite au moins une pièce flexible 12 formant guide lumière doit pouvoir suivre le déplacement par enfoncement du bouton de commande 17a, 17b, 17c et donc être déformable.

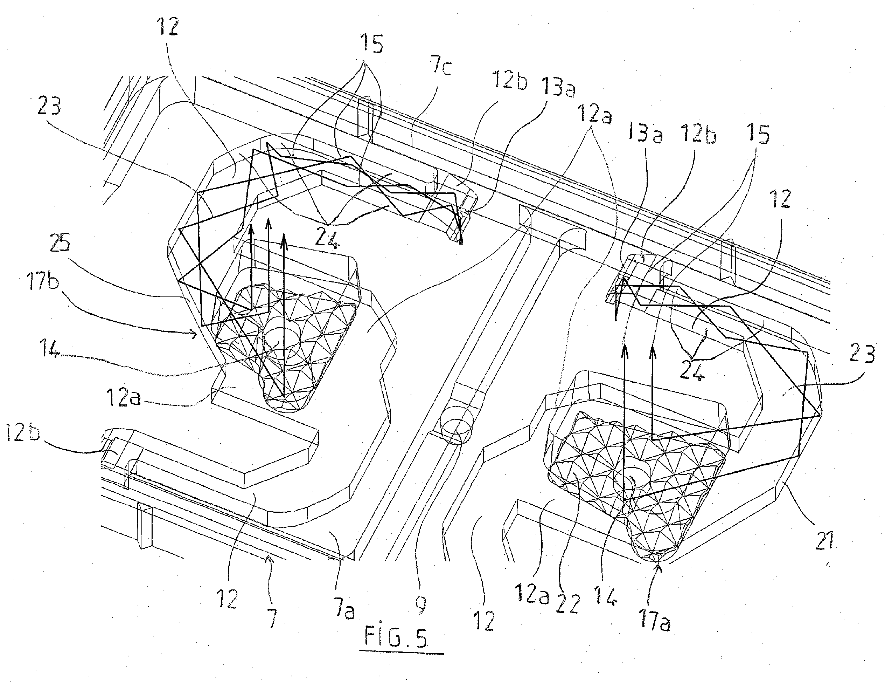

La figure 5 montre le parcours du faisceau lumineux dans une pièce flexible 12 formant guide lumière.

Avantageusement, la distance entre la source lumineuse et l'entrée du guide lumière 12 munie de son récepteur 13a demeure sensiblement constante, ceci que le bouton de commande 17a, 17b, 17c soit appuyé ou non en permettant une transmission optimale du faisceau de lumière de la source lumineuse au guide lumière 12 puis au bouton de commande 17a, 17b, 17c.

Afin de rendre flexible chaque pièce flexible 12 formant guide lumière, avantageusement de forme longiligne, il est procédé à une réduction de sa section par rapport à celle présentée par un guide lumière de l'état de la technique, cette réduction restant dans la limite des caractéristiques de tenue mécanique de la matière plastique utilisée pour sa réalisation. L'objectif principal est d'obtenir une flexion ne provoquant pas de contrainte de cisaillement interne à la matière de la pièce flexible 12 formant guide lumière, ce qui pourrait entraîner une opacification locale de cette matière par modification irréversible de sa structure cristalline.

A la figure 5, il est visible que ladite au moins une pièce flexible 12 formant guide lumière présente un canal interne 23 entouré de facettes réfléchissantes 24, des faisceaux lumineux 15 passant par le canal 23 du récepteur 13a vers le bouton de commande 17a, 17b correspondant en se réfléchissant consécutivement sur des facettes réfléchissantes 24. La forme avantageusement longiligne de la pièce flexible 12 formant guide lumière est agencée d'une manière telle qu'une possible déformation en flexion des facettes réfléchissantes 24 sur lesquelles se réfléchissent les faisceaux lumineux 15 n'entraîne pas une interruption ou une inversion desdits faisceaux lumineux 15 afin que tous les faisceaux 15 parviennent au bouton de commande 17a, 17b associé.

Les facettes réfléchissantes 24 qui sont les plus favorables à la réflexion de la lumière vers le bouton de commande 17a, 17b associé sont celles qui sont perpendiculaires au sens principal de flexion. A l'extrémité du canal 23 proche du bouton de commande 17a, 17b associé est délimitée une zone de réverbération ayant pour fonction de renvoyer le flux lumineux sur une facette de réverbération 25 qui est une facette réfléchissante de grande surface, ladite facette de réverbération envoyant les faisceaux lumineux 15 vers le bouton de commande 17a, 17b associé.

Les figures 6 et 7 montrent une portion d'une demi-partie longitudinale d'un support 7 avec la moitié d'un bouton de commande 17d, ce bouton 17d pouvant être un bouton de commande 17a ou 17b montré à la figure 5. Une seule pièce flexible 12 formant guide lumière est ainsi montrée à ces figures du fait de la coupe longitudinale du bouton 17d.

Pour une transmission optimale de la lumière de la source lumineuse 13, avantageusement une LED CMS, vers le bouton de commande 17d par le récepteur 13a de lumière, la position dudit récepteur 13a disposé à l'extrémité de la pièce flexible 12 associée à la source lumineuse 13 est conservée, ceci que le bouton de commande 17d soit pressé ou non.

Pour garantir cela, il est prévu de solidariser ladite extrémité de la pièce flexible 12 avec le support 7, avantageusement avec le rebord 7c du support 7. Ceci peut être fait par un élément de liaison 26. Cet élément de liaison 26 peut être de tout type par exemple un élément d'encliquetage, un élément vissé ou riveté. Il est aussi possible que ladite au moins une pièce flexible 12 formant guide lumière soit raccordée directement au support 7 en étant d'un seul tenant avec ledit support 7, ce qui peut être obtenu par exemple par surmoulage.

Ceci peut aussi s'appliquer pour l'élément de liaison 26 alors d'un seul tenant avec le support 7 et ladite au moins une pièce flexible 12. Il est aussi possible que ladite au moins une pièce flexible 12, le bouton de commande 17d et le support 7 forment une seule et unique pièce.

Aux figures 6 et 7, il est aussi visible le micro-interrupteur 14a du circuit imprimé 11 coopérant avec le contacteur 14 porté par la face interne du bouton de commande 17d, le contacteur 14 rentrant en contact avec le micro-interrupteur 14a quand le bouton de commande 17d est pressé par le doigt de l'utilisateur dans le sens de la flèche de pression Fp.

En se référant à toutes les figures, du fait du bouton de commande 17a à 17d pouvant être actionné par pression de l'utilisateur, il est obtenu un retour d'information tactile ressenti par l'utilisateur. De plus, en intégrant ladite au moins une pièce flexible 12 formant le guide lumière dans le support 7 et en la raccordant directement au bouton de commande 17a à 17d dans l'interface utilisateur 17 de communication tactile, cela rend ladite au moins une pièce 12 apte à suivre et à supporter les déformations du bouton de commande 17a à 17d, sans modification de la distance optique initiale avec la source lumineuse 13, ce qui permet de réduire considérablement le volume global de l'interface utilisateur 17.

L'utilisation de boutons de commande 17a à 17d de relativement faible hauteur avec des contacteurs 14 associés respectivement à un micro-interrupteur 14a, les micro-interrupteurs 14a étant directement montables, par soudage ou brasage par exemple, sur le circuit ou carte imprimée 11 selon la technologie CMS, permet de créer un circuit ou une carte imprimée de très faible surface sur laquelle les sources lumineuses 13 et les micro-interrupteurs 14a peuvent être disposés à proximité les uns des autres.

La possible mise en place d'une plaque de recouvrement en plastique transparent, cette plaque étant localement déformable au-dessus du circuit imprimé 11 permet de manipuler les boutons de commande 17a à 17d tout en laissant passer un signal lumineux continu visible à la surface extérieure de la plaque de recouvrement.

D'un point de vue esthétique, il est possible d'occulter complètement les partie lumineuses lorsqu'elles sont éteintes en intercalant un film coloré opaque entre la plaque de recouvrement en plastique transparent et le circuit imprimé 11, la couleur du film reproduisant avantageusement celle de la face dans laquelle affleure la surface éclairante de la pièce flexible 12 formant guide lumière.

La présence de zones déformables à l'intérieur du support 7 permet de rendre le support 7 plat et de faible épaisseur. L'interface utilisateur 17 est alors constituée de la simple superposition dudit support 7 et du circuit imprimé 11 CMS avec avantageusement une pièce de revêtement 21 au-dessus dudit support 7, sans réduire son efficacité. Compte tenu de leur forme plane, l'assemblage du support 7 et du circuit 11 peut être avantageusement réalisé par encliquetage.

Outre la réduction de volume et l'impact économique favorable qu'elle peut avoir sur le coût de revient de l'appareil, une telle interface utilisateur 17 est constituée d'une superposition de pièces plastiques encliquetables et donc pouvant être facilement assemblées lors de la phase de production de l'appareil électroménager qu'elle équipe et tout aussi facilement démantelée lors de la fin de vie du même appareil.

L'invention n'est pas limitée aux modes de réalisation précédemment décrits et s'étend à tous les modes de réalisation couverts par les revendications.

### REFERENCES

- 1.: Machine
- 1 a.: Corps
- 2.: Module
- 3.: Bec verseur
- 4.: Bassinelle
- 5.: Enveloppe
- 5a.: Face inférieure
- 6.: Bac
- 7.: Support
- 7a.: Face externe
- 7b.: Face interne
- 7c.: Rebord
- 8.: Flexible électrique
- 9.: Plot
- 9a.: Logement
- 10.: Face avant
- 11.: Circuit imprimé
- 11a.: Pièce souple
- 12.: Pièce flexible
- 12a.: Première portion
- 12b.: Seconde portion
- 13.: source lumineuse
- 13a.: Récepteur
- 14.: Contacteur
- 14a.: Micro-interrupteur
- 15.: Faisceau lumineux
- 16.: Moyens d'encliquetage
- 17.: Interface utilisateur
- 17a, 17b, 17c, 17d.: Bouton de commande
- 18.: Face inférieure
- 19.: Panneau latéral
- 19a.: Couvercle
- 20.: Réservoir d'eau
- 21.: Pièce de revêtement
- 22.: Zone d'appui
- 22a.: Cône diffusif
- 23.: Canal interne
- 24.: Facette réfléchissante
- 25.: Facette de réverbération
- 26.: Elément de liaison
- 27.: Traverse
- 28.: Pièce plate rigide
- Fp.: Flèche de pression

## Revendications

1. Interface utilisateur (17) pour machine (1) de préparation de boisson, l'interface utilisateur (17) comportant :
- un support (7) configuré pour être rendu solidaire de la machine (1),
- au moins un bouton de commande (17a à 17d) monté sur le support (7) et comprenant au moins une zone d'appui (22) conformée pour être enfoncée par un utilisateur,
- au moins une source lumineuse (13),
**caractérisée en ce qu'**elle comprend au moins une pièce flexible (12), dont une première portion (12a) supporte la zone d'appui (22) dudit bouton (17a à 17d) et une seconde portion (12b) est solidarisée au support (7), ladite au moins une pièce (12) formant un guide lumière comprenant une zone d'entrée (13a) de lumière en son intérieur, ladite au moins une source lumineuse (13) étant disposée au contact ou au regard de ladite zone d'entrée (13a) de ladite au moins une pièce flexible (12) formant guide lumière, ladite zone d'entrée (13a) étant réalisée à proximité de ladite seconde portion (12b) de sorte à rester dans la même position par rapport à ladite au moins une source lumineuse (13) que la zone d'appui (22) soit enfoncée ou non.

2. Interface utilisateur (17) selon la revendication précédente, comprenant un circuit ou une carte imprimée (11) contre laquelle est appliqué le support (7), chaque bouton de commande (17a à 17d) présentant au moins un contacteur (14) associé respectivement à un micro-interrupteur (14a) porté par le circuit imprimé (11), le contacteur (14) étant mis en contact avec le micro-interrupteur (14a) quand la zone d'appui (22) est enfoncée par l'utilisateur, ledit circuit imprimé (11) portant ladite au moins une source lumineuse (13).

3. Interface utilisateur (17) selon la revendication précédente, dans laquelle le support (7) est délimité par un rebord (7c), la hauteur du rebord (7c) correspondant sensiblement à la course d'enfoncement dudit au moins un bouton de commande (17a à 17d) lorsqu'un utilisateur exerce un appui sur ledit bouton (17a à 17d), les deux côtés opposés du rebord (7c) définissant respectivement une face interne (7b) et une face externe (7a), la face interne (7b) du support (7) étant appliquée contre le circuit imprimé (11) sensiblement plan, des moyens de solidarisation (9, 9a) amovible étant prévus entre le circuit imprimé (11) et la face interne (7b) dudit support (7).

4. Interface utilisateur (17) selon l'une quelconque des deux revendications précédentes, dans laquelle ladite au moins une source lumineuse (13) est une diode électroluminescente (LED), la LED étant associée à un circuit ou une carte imprimée (11) et dans laquelle la course d'enfoncement est comprise entre 0.3 et 3 mm et de préférence inférieure à 1 mm.

5. Interface utilisateur (17) selon l'une quelconque des revendications précédentes, dans laquelle la zone d'appui (22) et le bouton (17a à 17d) sont maintenus au support (7) uniquement par la au moins une pièce (12).

6. Interface utilisateur (17) selon l'une quelconque des revendications précédentes, configurée de sorte que le guide lumière guide de la lumière issue de la source lumineuse (13) jusqu'à la zone d'appui (22) et de sorte que la zone d'appui (22) diffuse une partie au moins de cette lumière pour le rendre visible par l'utilisateur.

7. Interface utilisateur (17) selon l'une quelconque des revendications précédentes, dans laquelle ladite au moins une pièce flexible (12) formant guide lumière et le support (7) sont d'un seul tenant et dans laquelle ladite au moins une pièce flexible (12) et le bouton de commande (17a à 17d) pression compose une pièce unique.

8. Interface utilisateur (17) selon l'une quelconque des revendications précédentes, dans laquelle la solidarisation entre ladite au moins une pièce flexible (12) formant guide lumière et le support (7) à proximité de ladite au moins une zone d'entrée (13a) de la lumière pour le guide est faite par l'intermédiaire d'un élément de liaison (26).

9. Interface utilisateur (17) selon l'une quelconque des revendications précédentes, dans laquelle ladite au moins une pièce flexible (12) formant guide lumière comporte un canal interne (23) muni de facettes réfléchissantes (24) sur sa paroi interne.

10. Interface utilisateur (17) selon l'une quelconque des revendications précédentes, dans laquelle ladite au moins une pièce flexible (12) est sensiblement longiforme, la première portion (12a) étant disposée à une extrémité de ladite pièce (12) tandis que la seconde portion (12b) est disposée à la seconde extrémité de ladite pièce (12).

11. Interface utilisateur (17) selon l'une quelconque des revendications précédentes, dans laquelle il est prévu deux pièces flexibles (12) formant chacune un guide lumière (12) pour au moins un des boutons de commande (17aà17d).

12. Interface utilisateur (17) selon l'une quelconque des revendications précédentes, dans laquelle ladite au moins une pièce flexible (12) formant guide lumière est agencée de sorte à diffuser la lumière qui la pénètre sur toute sa surface visible depuis l'extérieur de la machine (1).

13. Interface utilisateur (17) selon l'une quelconque des revendications précédentes, dans laquelle ladite au moins une pièce flexible (12) formant guide lumière est agencée de sorte à diffuser de la lumière au niveau de la zone d'appui (22) du bouton de commande (17a à 17d) et dans laquelle le bouton de commande (17a à 17d) comporte sur sa zone d'appui (22) au moins un cône diffusif (22a) de lumière.

14. Interface utilisateur (17) selon l'une quelconque des revendications précédentes, dans laquelle le ou les boutons de commande (17a à 17d) font partie d'un clavier à membrane.

15. Machine (1) de préparation de boisson comprenant une interface utilisateur (17) selon l'une quelconque des revendications précédentes.

## Patentansprüche

1. Benutzerschnittstelle (17) für Getränkezubereitungsmaschine (1), wobei die Benutzerschnittstelle (17) umfasst:
- einen Träger (7), der konfiguriert ist, um mit der Maschine (1) fest befestigt zu werden,
- wenigstens einen Schaltknopf (17a bis 17d), der auf dem Träger (7) montiert ist und wenigstens einen Aufstützbereich (22) umfasst, der angepasst ist, um von einem Benutzer eingedrückt zu werden,
- wenigstens eine Lichtquelle (13),
**dadurch gekennzeichnet, dass** sie wenigstens einen flexiblen Teil (12) umfasst, von dem ein erster Abschnitt (12a) den Aufstützbereich (22) der genannten Taste (17a bis 17d) trägt und ein zweiter Bereich (12b) mit dem Träger (7) fest befestigt ist, wobei der genannte wenigstens eine Teil (12) eine Lichtführung bildet, die einen Eingangsbereich (13a) des Lichts in seinen Innenbereich umfasst, wobei die genannte wenigstens eine Lichtquelle (13) in Kontakt oder gegenüber des genannten Eingangsbereichs (13a) des genannten wenigstens einen flexiblen Teils (12) angeordnet ist, der eine Lichtführung bildet, wobei der genannte Eingangsbereich (13a) in der Nähe des genannten zweiten Abschnitts (12b) derart realisiert ist, dass er im Verhältnis zu der genannten wenigstens einen Lichtquelle (13) in derselben Position bleibt, ganz gleich, ob der Aufstützbereich (22) eingedrückt ist oder nicht.

2. Benutzerschnittstelle (17) gemäß dem voranstehenden Anspruch, umfassend eine bedruckte Leiterplatte oder Karte (11), gegen die der Träger (7) angewendet wird, wobei jeder Steuerknopf (17a bis 17d) wenigstens einen Kontaktgeber (14) aufweist, der jeweils einem Mikroschalter (14a) zugeordnet ist, der von der bedruckten Leiterplatte (11) getragen wird, wobei der Kontaktgeber (14) mit dem Mikroschalter (14a) in Kontakt gebracht wird, wenn der Aufstützbereich (22) durch den Benutzer eingedrückt wird, wobei die genannte bedruckte Leiterplatte (11) die genannte wenigstens eine Lichtquelle (13) trägt.

3. Benutzerschnittstelle (17) gemäß dem voranstehenden Anspruch, bei dem der Träger (7) durch einen Rand (7c) begrenzt ist, wobei die Höhe des Randes (7c) deutlich dem Eindrückhub des genannten wenigstens einen Steuerknopfes (17a bis 17d) entspricht, wenn ein Benutzer einen Druck auf den genannten Knopf (17a bis 17d) ausübt, wobei die zwei gegenüber liegenden Seiten des Randes (7c) jeweils eine interne Seite (7b) und eine externe Seite (7a) definieren, wobei die interne Seite (7b) des Trägers (7) gegen die deutlich ebene bedruckte Leiterplatte (11) angewendet wird, wobei Mittel (9, 9a) zur abnehmbaren Befestigung zwischen der bedruckten Leiterplatte (11) und der internen Seite (7b) des genannten Trägers (7) vorgesehen sind.

4. Benutzerschnittstelle (17) gemäß einem der zwei voranstehenden Ansprüche, bei der die genannte wenigstens eine Lichtquelle (13) eine Leuchtdiode (LED) ist, wobei die LED einer bedruckten Leiterplatte oder Karte (11) zugeordnet ist und bei der der Eindrückhub zwischen 0,3 und 3 mm inbegriffen und bevorzugt kleiner als 1 mm ist.

5. Benutzerschnittstelle (17) gemäß einem der voranstehenden Ansprüche, bei der der Aufstützbereich (22) und der Knopf (17a bis 17d) nur durch das wenigstens eine Teil (12) am Träger (7) festgehalten werden.

6. Benutzerschnittstelle (17) gemäß einem der voranstehenden Ansprüche, die derart konfiguriert ist, dass die Lichtführung aus der Lichtquelle (13) stammendes Licht bis zum Aufstützbereich (22) führt, und derart, dass der Aufstützbereich (22) wenigstens einen Teil dieses Lichts ausgibt, um es für den Benutzer sichtbar zu machen.

7. Benutzerschnittstelle (17) gemäß einem der voranstehenden Ansprüche, bei der das genannte wenigstens eine flexible Teil (12), das eine Lichtführung bildet, und der Träger (7) aus einem Stück sind und in dem das genannte wenigstens eine flexible Teil (12) und der Drucksteuerknopf (17a bis 17d) ein einziges Teil ausmacht.

8. Benutzerschnittstelle (17) gemäß einem der voranstehenden Ansprüche, bei der die feste Befestigung zwischen dem genannten wenigstens einen flexiblen Teil (12), das eine Lichtführung bildet, und dem Träger (7) in der Nähe des genannten wenigstens einen Eingangsbereichs (13a) des Lichts für die Führung anhand eines Verbindungselements (26) erfolgt.

9. Benutzerschnittstelle (17) gemäß einem der voranstehenden Ansprüche, bei der das genannte wenigstens eine flexible Teil (12), das eine Leuchtführung bildet, einen internen Kanal (23) umfasst, der mit reflektierenden Facetten (24) auf seiner internen Wand versehen ist.

10. Benutzerschnittstelle (17) gemäß einem der voranstehenden Ansprüche, bei der wenigstens ein flexibles Teil (12) deutlich länglich ist, wobei das erste Teil (12a) an einem Ende des genannten Teils (12) angeordnet ist, während der zweite Abschnitt (12b) an dem zweiten Ende des genannten Teils (12) angeordnet ist.

11. Benutzerschnittstelle (17) gemäß einem der voranstehenden Ansprüche, bei der zwei flexible Teile (12) vorgesehen sind, die jeweils eine Lichtführung (12) für wenigstens einen der Steuerknöpfe (17a bis 17d) bilden.

12. Benutzerschnittstelle (17) gemäß einem der voranstehenden Ansprüche, bei der das wenigstens eine flexible Teil (12), das eine Lichtführung bildet, derart angeordnet ist, dass es das Licht, das es durchdringt, auf seine gesamte, von der Außenseite der Maschine (1) sichtbare Fläche verteilt.

13. Benutzerschnittstelle (17) gemäß einem der voranstehenden Ansprüche, bei der das genannte wenigstens eine flexible Teil (12), das eine Lichtführung bildet, derart angeordnet ist, dass es das Licht am Aufstützbereich (22) des Steuerknopfes (17a bis 17d) verteilt, und bei der der Steuerknopf (17a bis 17d) auf seinem Aufstützbereich (22) wenigstens einen Verteilerkegel (22a) des Lichts umfasst.

14. Benutzerschnittstelle (17) gemäß einem der voranstehenden Ansprüche, bei der der Schaltknopf oder die Schaltknöpfe (17a bis 17d) Teil einer Tastatur mit Membran ist / sind.

15. Getränkezubereitungsmaschine (1) mit einer Benutzerschnittstelle (17) gemäß einem der voranstehenden Ansprüche.

## Claims

1. A user interface (17) for a machine (1) for preparing beverages, with the user interface (17) comprising:
- a support (7) so configured as to be made integral with the machine (1),
- at least one control button (17a to 17d) mounted on the support (7) and comprising at least one bearing zone (22) so configured as to be pressed by a user,
- at least one light source (13),
**characterized in that** it comprises at least one flexible part (12), a first portion (12a) of which supports the bearing zone (22) of said button (17a to 17d) and a second portion (12b) is secured to the support (7), with said at least one part (12) forming a light guide comprising a light inlet zone (13a) inside thereof, with said at least one light source (13) being positioned in contact with or opposite said inlet zone (13a) of said at least one flexible part (12) forming the light guide, with said inlet zone (13a) being provided close to said second portion (12b) so as to remain in the same position relative to said at least one light source (13) whether the bearing zone (22) is pressed or not.

2. A user interface (17) according to the preceding claim, comprising a circuit or a printed circuit board (11) against which the support (7) is applied, with each control button (17a to 17d) having at least one contactor (14) respectively associated with a micro-switch (14a) carried by the printed circuit (11), with the contactor (14) being brought into contact with the micro-switch (14a) when the bearing zone (22) is pressed by the user, with said printed circuit (11) carrying said at least one light source (13).

3. A user interface (17) according to the preceding claim, wherein the support (7) is delimited by a rim (7c), with the height of the rim (7c) substantially matching the stroke distance of said at least one control button (17a to 17d) when a user presses said button (17a to 17d), with the two opposite sides of the rim (7c) respectively defining an inner face (7b) and an outer face (7a), with the inner face (7b) of the support (7) being applied against the substantially flat printed circuit (11), with removable securing means (9, 9a) being provided between the printed circuit (11) and the inner face (7b) of said support (7).

4. A user interface (17) according to any one of the preceding two claims, wherein said at least one light source (13) is a light emitting diode (LED), with the LED being associated with a circuit or a printed circuit board (11) and wherein the stroke distance ranges from 0.3 to 3mm and is preferably smaller than 1mm.

5. A user interface (17) according to any one of the preceding claims, wherein the bearing zone (22) and the button (17a to 17d) are fixed to the support (7) by the at least one piece (12) only.

6. A user interface (17) according to any one of the preceding claims, so configured that the light guide guides light from the light source (13) up to the bearing zone (22) and so that the bearing zone (22) scatters at least a part of such light to make it visible to the user.

7. A user interface (17) according to any one of the preceding claims, wherein said at least one flexible part (12) forming a light guide and the support (7) are made of one piece and wherein said at least one flexible part (12) and the pressure control button (17a to 17d) is a single part.

8. A user interface (17) according to any one of the preceding claims, wherein said at least one flexible part (12) forming a light guide and the support (7) close to said at least one light inlet zone (13a) for the guide are secured together by means of a connecting element (26).

9. A user interface (17) according to any one of the preceding claims, wherein said at least one flexible part (12) forming a light guide comprises an inner channel (23) provided with reflecting facets (24) on its inner wall.

10. A user interface (17) according to any one of the preceding claims, wherein said at least one flexible part (12) is substantially elongate, with the first portion (12a) being positioned at one end of said part (12) whereas the second portion (12b) is positioned at the second end of said part (12).

11. A user interface (17) according to any one of the preceding claims, wherein there two flexible parts (12) are provided, with each one forming a light guide (12) for at least one of the control buttons (17a to 17d).

12. A user interface (17) according to any one of the preceding claims, wherein said at least one flexible part (12) forming a light guide is so arranged as to scatter the light entering therein on the whole zone visible from outside the machine (1).

13. A user interface (17) according to any one of the preceding claims, wherein said at least one flexible part (12) forming a light guide is so arranged as to scatter light at the bearing zone (22) of the control button (17a to 17d) and wherein the control button (17a to 17d) comprises at least one light scattering cone (22a) on its bearing zone (22).

14. A user interface (17) according to any one of the preceding claims, wherein the control button(s) (17a to 17d) form part of a membrane buttonboard.

15. A machine (1) for preparing beverages comprising a user interface (17) according to any one of the preceding claims.
